# EUROPÄISCHE PATENTSCHRIFT

(11) **EP 3 655 829 B1**
(45) Veröffentlichungstag und Bekanntmachung des Hinweises auf die Patenterteilung: **08.05.2024**
(21) Anmeldenummer: 18769705.7
(22) Anmeldetag: 14.09.2018
(51) Int. Cl.: B01F 33/452, B01F 33/81, B01F 35/22, B01L 7/00

(54) **LABORGERÄT MIT EINSTELLBAREN BETRIEBSPARAMETERN ZUM STEUERN EINER LABORGERÄTFUNKTION**
LABORATORY DEVICE WITH ADJUSTABLE OPERATING PARAMETERS FOR CONTROLLING A LABORATORY DEVICE FUNCTION
APPAREIL DE LABORATOIRE PRÉSENTANT DES PARAMÈTRES DE FONCTIONNEMENT POUVANT ÊTRE RÉGLÉS SERVANT À COMMANDER UNE FONCTION D'APPAREIL DE LABORATOIRE

(30) Priorität: 15.09.2017 DE 202017004815 U
(43) Veröffentlichungstag der Anmeldung: 27.05.2020
(73) Patentinhaber: Hans Heidolph GmbH, 93309 Kelheim (DE)
(72) Erfinder: REINHOLD, Stefan, 90480 Nürnberg (DE)
(74) Vertreter: Stolmár & Partner Patentanwälte PartG mbB
(86) Internationale Anmeldenummer: PCT/EP2018/074926
(87) Internationale Veröffentlichungsnummer: WO 2019/053208

(56) Entgegenhaltungen:
- CN-U- 205 850 744
- DE-A1-102011 111 581
- US-A- 5 428 470
- Anonymous: "MAGNETRÜHRER 2012/2013", 2mag AG, 27 May 2012 (2012-05-27), pages 1-44, XP055791988, Retrieved from the Internet: URL:https://files.vogel.de/vogelonline/vog elonline/companyfiles/4916.pdf [retrieved on 2021-03-31]
- 2mag: "MAGNETIC STIRRERS 2012/2013", , 15 July 2016 (2016-07-15), XP055846520, Retrieved from the Internet: URL:http://web.archive.org/web/20160715173 819if_/http://lobov.com.br/catalogos/repre sentadas/2mag/2mag_Catalogo_2012.pdf [retrieved on 2021-10-01]

## Beschreibung

Die vorliegende Erfindung bezieht sich auf ein Laborgerät, insbesondere einen Magnetrührer, mit mindestens einem einstellbaren Betriebsparameter zum Steuern mindestens einer Laborgerätfunktion.

Ein derartiges Laborgerät ist beispielsweise ein Magnetrührer, der eine Aufstellplatte und einen im Gehäuse des Laborgeräts angeordneten Magnetantrieb umfasst. Der Magnetantrieb ist dabei zum Erzeugen eines geeigneten, typischerweise sich zeitlich ändernden Magnetfelds ausgebildet, um einen Rührer in einem auf der Aufstellplatte stehenden Gefäß in eine Rührbewegung zu versetzen. Die Aufstellplatte kann dabei insbesondere eine Heizplatte darstellen, um eine im Gefäß befindliche Substanz zu erwärmen oder zu erhitzen.

Ein solcher Magnetrührer ist beispielsweise aus DE 10 2006 005 155 B3 bekannt. Zum Steuern seiner Rühr- und/oder Heizfunktion können zugehörige Betriebsparameter, wie beispielsweise eine Heizplattentemperatur oder eine Rührstärke, über eine an einer Gehäusevorderseite angeordnete Benutzerschnittstelle mit einer Anzeige, mehreren Bedienknöpfen und einem Drehregler eingestellt werden.

Mit mehreren Magnetrührern dieser Art können auch mehrere Gefäße gleichzeitig gerührt und/oder geheizt werden. Die jeweiligen Betriebsparameter müssen dann bei jedem Magnetrührer separat von den anderen Magnetrührern eingestellt werden.

US 5,428,470 A beschreibt ein automatisches analytisches Systemmodul mit einzelnen Modulen, welche in Modulgruppen gruppiert sind und mittels zentraler Steuereinheiten und eines zentralen Eingabecomputers für einen Benutzer gesteuert werden. Ein alternatives Magnetrührersystem ist in Dokument CN205850744U offenbart. Jedes Magnetrührermodul weist einen USB Anschluss auf, wodurch ein zusätzliches Magnetrührermodul angeschlossen wird und die zwei Module gemeinsam betrieben werden. Ein ähnliches modulares Magnetrührersystem ist auch im Merkblatt "MAGNETRÜHRER 2012/2013 magnetic emotion" der Firma "2mag" offenbart.

Es ist Aufgabe der vorliegenden Erfindung, ein alternatives bzw. verbessertes Laborgerät mit mindestens einem einstellbaren Betriebsparameter zum Steuern mindestens einer Laborgerätfunktion sowie einen entsprechenden Laborgeräteset gleichartiger Laborgeräte bereitzustellen, mit denen die Geräteherstellung und/oder deren Betrieb und/oder deren Bedienung für den Fall, dass mehrere gleichartige Laborgeräte gleichzeitig verwendet werden, vereinfacht oder verbessert werden kann.

Diese Aufgabe wird durch ein Laborgeräteset gemäß Anspruch 1 und einen Nachrüstsatz gemäß Anspruch 11 gelöst. Weiterbildungen der Erfindung sind in den Ansprüchen 2-10 angegeben. Alle in den Ansprüchen und der Beschreibung für das genannte Laborgeräteset beschriebenen weiterführenden Merkmale und Wirkungen gelten sinngemäß auch in Bezug auf den Laborgeräteset und den Nachrüstsatz, und umgekehrt.

Gemäß einem ersten Aspekt der Erfindung ist ein Laborgerät mit mindestens einem einstellbaren Betriebsparameter zum Steuern mindestens einer Laborgerätfunktion vorgesehen, das insbesondere einen Magnetrührer darstellen kann. Das erfindungsgemäße Laborgerät hat ein Außengehäuse, das eine Kopplungseinrichtung zum Ankoppeln des erfindungsgemäßen Laborgeräts an mindestens ein weiteres Laborgerät für dieselbe mindestens eine Laborgerätfunktion, bei dem der mindestens eine Betriebsparameter ebenfalls einstellbar ist, aufweist. Die Kopplungseinrichtung ist dabei derart ausgebildet, dass mittels der Kopplungseinrichtung das erfindungsgemäße Laborgerät und das mindestens eine weitere Laborgerät gleichzeitig betreibbar sind und der mindestens eine Betriebsparameter zentral über eine gemeinsame Einstelleinrichtung unabhängig und/oder einheitlich für das erfindungsgemäße Laborgerät und das mindestens eine weitere Laborgerät einstellbar ist.

Das oder die genannten weiteren Laborgeräte stellen also im Hinblick auf deren Laborgerätfunktionen gleichartige Laborgeräte wie das erfindungsgemäße Laborgerät dar; im Übrigen können sie, müssen jedoch nicht identisch mit diesem oder untereinander ausgebildet sein. Die genannte zentralisierte Bedienung und/oder Ansteuerung der zusammengekoppelten Laborgeräte durch die zentrale Einstellung von deren Betriebsparametern mittels der gemeinsamen Einstelleinrichtung kann beispielsweise über das erfindungsgemäße Laborgerät oder eines der weiteren Laborgeräte oder alternativ über einen Computer oder eine andere externe Steuereinrichtung erfolgen. Verschiedene spezifische Beispiele hierfür werden weiter unten, insbesondere in Bezug auf das erfindungsgemäße Laborgeräteset, erläutert.

Durch die genannte Kopplung und zentralisierte Bedienung und/oder Ansteuerung mehrerer gleichartiger Laborgeräte kann ein einzelnes Laborgerät (insbesondere in einer modularen Weise) zu einem Mehrfach-Laborgerät, beispielsweise ein Einfach-Magnetrührer zu einem Mehrfach-Magnetrührer, erweitert werden. Die so zusammenkoppelbaren Laborgeräte können insbesondere vereinfacht ausgebildet sein als gleichartige Laborgeräte, die einzeln betrieben und bedient werden müssen. Beispielsweise entfällt die Notwendigkeit, bei jedem der zusammenkoppelbaren Laborgeräte eine eigene Einstelleinrichtung zum Einstellen von dessen Betriebsparametern vorzusehen. Je nach Anwendungsfall können neben der gemeinsamen Einstelleinrichtung auch weitere Betriebs- oder Bedienungselemente, wie eine Anzeige für den Benutzer etc., in einer platz- und aufwandsparenden Weise zentralisiert vorgesehen und bei einzelnen der zusammenkoppelbaren Laborgeräte weggelassen sein.

Dank der Kopplungseinrichtung hat der Benutzer des erfindungsgemäßen Laborgeräts die Möglichkeit, auch noch nachträglich zu entscheiden, ob und gegebenenfalls wie viele weitere Laborgeräte an dieses anzukoppeln. Die Kopplungseinrichtung kann insbesondere als eine lösbare und vorzugsweise mehrmals bis beliebig oft wiederverwendbare Kopplungseinrichtung ausgebildet sein, um einen jederzeit anpassbaren modularen Aufbau, insbesondere in Bezug auf die Anzahl der angekoppelten weiteren Laborgeräte, zu ermöglichen.

Die zentrale Einstellung der Betriebsparameter kann insbesondere eine einfachere, schnellere und/oder zuverlässigere Bedienung und/oder Ansteuerung der so zusammengekoppelten Laborgeräte ermöglichen als wenn der Betrieb und die Betriebsparametereinstellung für jeden der gleichzeitig verwendeten Laborgeräte separat ist. Insbesondere im Falle einer einheitlichen (d. h. gleichen) Betriebsparametereinstellung für die zusammengekoppelten Laborgeräte entfällt die Wiederholung der Einstellung für jedes weitere Laborgerät, was die Vergleichbarkeit der Laborgeräte und der jeweiligen Prozesse untereinander erhöhen und die Wahrscheinlichkeit etwaiger Fehler bei der Betriebsparametereinstellung reduzieren kann.

Bei einer spezifischen Ausgestaltung stellt die gemeinsame Einstelleinrichtung eine im Außengehäuse des erfindungsgemäßen Laborgeräts oder in einem Außengehäuse eines der weiteren Laborgeräte integrierte Benutzerschnittstelle dar. Alternativ kann die gemeinsame Einstelleinrichtung eine in einer externen Steuerungseinheit, insbesondere einem Computer, vorgesehene Benutzerschnittstelle oder automatische Steuerungsschnittstelle darstellen. Bei dieser wie auch jeder anderen Ausgestaltung kann die gemeinsame Einstelleinrichtung zum Einstellen des mindestens einen Betriebsparameters vorzugsweise wahlweise einheitlich oder unabhängig für das erfindungsgemäße Laborgerät und das mindestens eine weitere Laborgerät ausgebildet sein, damit der Benutzer je nach Anwendungsfall zwischen der Einstellung gleicher oder individueller Betriebsparameter für die zusammengekoppelten Laborgeräte entscheiden kann.

Gemäß einer Ausführungsform umfasst die Kopplungseinrichtung
- mindestens ein mechanisches Kopplungselement zu einem lösbaren und insbesondere starren Befestigen des mindestens einen weiteren Laborgeräts an dem erfindungsgemäßen Laborgerät und/oder
- mindestens ein elektrisches Kopplungselement zu einer lösbaren elektrischen Verbindung des erfindungsgemäßen Laborgeräts mit dem mindestens einen weiteren Laborgerät und/oder zu einer lösbaren elektrischen Verbindung des erfindungsgemäßen Laborgeräts mit einer externen Steuerungseinheit, jeweils zum Weiterleiten des mittels der gemeinsamen Einstelleinrichtung für das erfindungsgemäße Laborgerät und/oder für das mindestens eine weitere Laborgerät eingestellten mindestens einen Betriebsparameters an das jeweilige Laborgerät.

Die genannte mechanische Kopplung kann für eine besonders platzsparende und insbesondere beim starren Befestigen für eine besonders stabile Anordnung der zusammengekoppelten Laborgeräte sorgen, was beispielsweise den gleichzeitigen Betrieb der Laborgeräte weiter vereinfachen und/oder Platz auf einer Arbeitsfläche des Benutzers sparen kann. Es kann hier grundsätzlich jedes geeignete mechanische oder elektrische Kopplungselement zum Einsatz kommen, wobei rein beispielhaft einige spezifische Beispiele weiter unten genannt werden. Das elektrische Kopplungselement kann insbesondere zusätzlich zur Stromversorgung der angekoppelten weiteren Laborgeräte über das erfindungsgemäße Laborgerät ausgebildet sein.

Bei einer Weiterbildung der obigen Ausführungsform ist das mindestens eine mechanische Kopplungselement mit dem mindestens einen elektrischen Kopplungselement integral ausgebildet, insbesondere in Form mindestens eines mechanisch fixierenden elektrischen Steckverbinders. Dies kann besonders platzsparend sein und/oder zum Schutz und Stabilisierung des elektrischen Kopplungselements durch das mechanische Kopplungselement beitragen. Insbesondere kann das mechanische Kopplungselement zu diesem Zweck dichtend gegen Flüssigkeiten ausgebildet sein.

Alternativ oder zusätzlich kann dabei das mechanische Kopplungselement und/oder das elektrische Kopplungselement eine Führungseinrichtung zur Ausrichtung des erfindungsgemäßen Laborgeräts an dem/den anzukoppelnden weiteren Laborgerät(en) und/oder eine Rast- oder Klemmeinrichtung zum Fixieren des erfindungsgemäßen Laborgeräts an dem/den anzukoppelnden weiteren Laborgerät(en) aufweisen und/oder zwei an einander gegenüberliegenden Seiten des Außengehäuses des erfindungsgemäßen Laborgeräts angeordnete mechanische und/oder elektrische Kopplungselemente jeweils zum Ankoppeln eines der weiteren Laborgeräte umfassen. Durch die Führungseinrichtung bzw. die Rast- oder Klemmeinrichtung kann ein ungewolltes Verschieben der zusammengekoppelten Laborgeräte relativ zueinander oder deren ungewolltes Lösen voneinander verhindert werden. Mit zwei an gegenüberliegenden Seiten des Außengehäuses, vorzugsweise symmetrisch oder einander gegenüberliegend angeordneten mechanischen oder elektrischen Kopplungselementen kann eine besonders stabile und/oder platzsparende Anordnung der zusammengekoppelten Laborgeräte erzielbar sein.

Vorzugsweise umfasst das erfindungsgemäße Laborgerät ferner eine Überwachungseinheit, die zur Detektion einer Gesamtzahl von mittels der Kopplungseinrichtung des erfindungsgemäßen Laborgeräts und entsprechender oder komplementärer Kopplungseinrichtungen des mindestens einen weiteren Laborgeräts zusammengekoppelten Laborgeräte ausgebildet ist und besonders bevorzugt ferner zur Ausgabe eines Warnsignals und/oder zu einer Leistungsbegrenzung des erfindungsgemäßen Laborgeräts bei Überschreitung eines vorbestimmten Gesamtzahlgrenzwerts der zulässigen Gesamtzahl zusammengekoppelter Laborgeräte ausgebildet ist. Dabei kann die detektierte Gesamtzahl der zusammengekoppelten Laborgeräte insbesondere auch zu geräteinternen Kontrollzwecken dienen und/oder intern bei der Bereitstellung der Weiterleitung der über die gemeinsame Einstelleinrichtung eingestellten Betriebsparameter an die jeweiligen Laborgeräte verwendet werden. Durch das Überwachen der Nichtüberschreitung eines vorbestimmten Gesamtzahlgrenzwerts (beispielsweise vier Stück) kann beispielsweise eine Überlastung einzelner Komponenten der elektrischen Stromversorgung der zusammengekoppelten Laborgeräte verhindert werden.

Alternativ oder zusätzlich dazu umfasst das erfindungsgemäße Laborgerät vorzugsweise ferner eine im Außengehäuse angeordnete Benutzeranzeige, die zum Anzeigen des eingestellten mindestens einen Betriebsparameters für das erfindungsgemäße Laborgerät und besonders bevorzugt zusätzlich für die an dieses angekoppelten weiteren Laborgeräte und/oder zum Anzeigen der Gesamtzahl zusammengekoppelter Laborgeräte ausgebildet ist. Das Anzeigen der eingestellten Betriebsparameter am erfindungsgemäßen Laborgerät kann deren Einstellung und/oder Kontrolle für den Benutzer vereinfachen oder unterstützen. Das Anzeigen der Gesamtzahl zusammengekoppelter Laborgeräte kann dabei einer zusätzlichen Kontrolle der korrekten Funktion des Gesamtsystems durch den Benutzer dienen.

Gemäß einer Ausführungsform sind das erfindungsgemäße Laborgerät und das mindestens eine weitere Laborgerät als Magnetrührer ausgebildet, die jeweils eine Aufstellplatte, insbesondere eine Heizplatte, und einen innerhalb des Außengehäuses angeordneten Magnetantrieb zum Erzeugen eines geeigneten Magnetfelds, um einen Rührer in einem auf der Aufstellplatte stehenden Gefäß in eine Rührbewegung zu versetzen, umfassen. Dabei umfassen die durch den mindestens einen einstellbaren Betriebsparameter steuerbaren Laborgerätfunktionen das Rühren und/oder Heizen einer Substanz in einem auf der Aufstellplatte stehenden Gefäß.

Bei einer Weiterbildung dieser Ausführungsform ist die Kopplungseinrichtung des erfindungsgemäßen Laborgeräts ferner zur mechanischen und/oder magnetischen Übertragung einer Antriebsenergie auf einen zur Umwandlung dieser Antriebsenergie in ein zur Rührfunktion geeignetes Magnetfeld ausgebildeten Magnetantrieb des mindestens einen weiteren Laborgeräts ausgebildet, sodass das mindestens eine weitere Laborgerät vorzugsweise keine eigene Antriebsenergie zum Erzeugen des für dessen Rührfunktion geeigneten Magnetfelds benötigt. Dies kann insbesondere zu einer konstruktiven Vereinfachung der weiteren Laborgeräte führen und beispielsweise deren Größe, Gewicht und/oder Herstellungskosten reduzieren.

Ein weiterer Aspekt der Erfindung ist eine Steuerungseinheit für ein Laborgerät der hierin dargelegten Art, wobei die Steuerungseinheit ausgebildet und/oder programmiert ist,
- den mindestens einen Betriebsparameter, der mittels der gemeinsamen Einstelleinrichtung in Bezug auf das erfindungsgemäße Laborgerät eingestellt ist, zu erkennen und das erfindungsgemäße Laborgerät in Abhängigkeit davon zu betreiben und/oder
- den mindestens einen Betriebsparameter, der mittels der gemeinsamen Einstelleinrichtung in Bezug auf das erfindungsgemäße Laborgerät und auf die daran angekoppelten weiteren Laborgeräte eingestellt ist, zu erkennen und das erfindungsgemäße Laborgerät und die daran angekoppelten weiteren Laborgeräte in Abhängigkeit davon zu betreiben und/oder
- eine Gesamtzahl von mittels der Kopplungseinrichtung des erfindungsgemäßen Laborgeräts und entsprechender oder komplementärer Kopplungseinrichtungen des mindestens einen weiteren Laborgeräts zusammengekoppelten Laborgeräte zu detektieren und vorzugsweise ferner bei Überschreitung eines vorbestimmten Gesamtzahlgrenzwerts der zulässigen Gesamtzahl zusammengekoppelter Laborgeräte eine Leistung des erfindungsgemäßen Laborgeräts zu begrenzen und/oder ein Warnsignal auszugeben.

Eine derartige Steuerungseinheit kann beispielsweise im erfindungsgemäßen Laborgerät und/oder in einem anderen oder jedem der zusammengekoppelten Laborgeräte untergebracht sein. Alternativ oder zusätzlich kann es sich auch um eine externe Steuerungseinheit handeln, die mit dem erfindungsgemäßen Laborgerät und insbesondere auch mit den an dieses angekoppelten weiteren Laborgeräten beispielsweise mittels der oben genannten elektrischen Kopplungseinrichtung(en) kommuniziert. Das Erkennen der für das erste Laborgerät oder aber für ein konkretes der daran angekoppelten weiteren Laborgeräte bestimmten Einstellungen der Betriebsparameter und das davon abhängige Ansteuern dieser Laborgeräte macht insbesondere eine zentrale Einstellung der Betriebsparameter für alle zusammengekoppelten Laborgeräte möglich.

Gemäß einem weiteren Aspekt ist ein Laborgeräteset vorgesehen, umfassend
- ein erfindungsgemäßes Laborgerät der hierin dargelegten Art, das ein erstes Laborgerät darstellt, und
- die oben genannten an das erste Laborgerät mittels dessen Kopplungseinrichtung ankoppelbare weitere gleichartige Laborgeräte, von denen jedes ein Außengehäuse mit einer Kopplungseinrichtung zum Ankoppeln an das erste Laborgerät oder aneinander aufweist, welche derart ausgebildet ist, dass das erste und das mindestens eine weitere Laborgerät mittels deren Kopplungseinrichtungen gleichzeitig betreibbar sind und der mindestens eine Betriebsparameter des jeweiligen Laborgeräts zentral über eine gemeinsame Einstelleinrichtung unabhängig und/oder einheitlich einstellbar ist.

Dabei sind die Kopplungseinrichtungen des ersten und der weiteren Laborgeräte untereinander derart entsprechend oder komplementär ausgebildet, dass das erste und die weiteren Laborgeräte jeweils durch das Zusammenwirken der jeweiligen Kopplungseinrichtungen aneinander ankoppelbar sind. Mit anderen Worten können zum Koppeln zweier derartiger Laborgeräte deren Kopplungseinrichtungen aneinander gekoppelt werden, wodurch beispielsweise ein wahlweises modulares Zusammenschließen mehrerer Laborgeräte des Laborgerätesets ermöglicht wird.

Für die Kopplungseinrichtungen der weiteren Laborgeräte des erfindungsgemäßen Laborgerätesets kann insbesondere das hierin in Bezug auf die Kopplungseinrichtung des ersten Laborgeräts Ausgeführte sinngemäß gelten. Vorzugsweise sind die Kopplungseinrichtungen des ersten und der weiteren Laborgeräte untereinander einheitlich, z. B. im Wesentlichen gleich, ausgebildet.

Bei einer spezifischen Ausgestaltung eines Laborgerätesets der hierin dargelegten Art stellt das erste Laborgerät ein Basislaborgerät (auch als Master- oder High-End-Laborgerät bezeichnet) dar, in dessen Außengehäuse die gemeinsame Einstelleinrichtung in Form einer Benutzerschnittstelle integriert ist. Das mindestens eine weitere Laborgerät stellt dabei eine Anzahl (eins oder mehr) von vorzugsweise untereinander im Wesentlichen identischen Erweiterungslaborgeräten (auch als Slave- oder Low-End-Laborgeräte bezeichnet) dar, die an das Basislaborgerät mittels der jeweiligen Kopplungseinrichtungen modular ankoppelbar sind. Dabei umfassen die Kopplungseinrichtungen des Basislaborgeräts und der Erweiterungslaborgeräte jeweils mindestens ein elektrisches Kopplungselement zu einer lösbaren elektrischen Verbindung des Basislaborgeräts und der Erweiterungslaborgeräte untereinander zur Weiterleitung des an der Benutzerschnittstelle des Basislaborgeräts für die Erweiterungslaborgeräte eingestellten mindestens einen Betriebsparameters an die Erweiterungslaborgeräte. Im Übrigen kann bei dieser Ausgestaltungsvariante insbesondere das weiter oben und nachfolgend zur Erläuterung der Erfindung in Bezug auf das erste Laborgerät Dargelegte sinngemäß auch für ein Erweiterungslaborgerät gelten. Die Benutzerschnittstelle kann beliebige zur Betriebsparametereinstellung geeignete Elemente umfassen, z. B. Bedienknöpfe, Drehregler, ein Touchscreen etc..

Bei einer hierzu alternativen Ausgestaltung des erfindungsgemäßen Laborgerätesets stellen das erste Laborgerät und das mindestens eine weitere Laborgerät eine Anzahl von modularen und vorzugsweise untereinander identischen Laborgeräten dar, die aneinander mittels der jeweiligen Kopplungseinrichtungen wahlweise ankoppelbar sind. Der jeweilige mindestens eine Betriebsparameter der modularen Laborgeräte ist dabei zentral über eine in einer externen Steuerungseinheit, insbesondere einem Computer, vorgesehene gemeinsame Einstelleinrichtung einstellbar. Hierzu umfasst die Kopplungseinrichtung eines jeden modularen Laborgeräts mindestens ein elektrisches Kopplungselement zu einer lösbaren elektrischen Verbindung der modularen Laborgeräte mit der externen Steuerungseinheit und/oder untereinander zum Weiterleiten des mittels der gemeinsamen Einstelleinrichtung für das jeweilige modulare Laborgerät eingestellten mindestens einen Betriebsparameters an dieses modulare Laborgerät.

Durch die hierin dargelegte modulare Ausgestaltung von Laborgeräten zum gleichzeitigen Betreiben und/oder Ansteuern mehrerer gleichartiger Laborgeräte ist es insbesondere möglich, die Erweiterungslaborgeräte der obigen ersten Ausgestaltungsvariante bzw. die modularen Laborgeräte der obigen zweiten Ausgestaltungsvariante eines erfindungsgemäßen Laborgerätesets einfacher auszubilden als einzeln zu betreibende Laborgeräte. Beispielsweise ist es dabei möglich, bei den vereinfachten Laborgeräten Kosten und Bauraum durch konstruktive Verlagerung oben erwähnter Funktionselemente wie Einstelleinrichtung für Betriebsparameter, Anzeige oder Antrieb auf ein zentrales Gerät einzusparen. Insgesamt kann dadurch Platz auf einer Arbeitsfläche bei einem Benutzer gespart werden. Die Bedienung aller zusammenkoppelbaren Laborgeräte kann einheitlich, bei Bedarf zumindest teilweise zentral, und damit besonders leicht verständlich, zeitsparend und/oder überschaubar ausgestaltet sein. Insbesondere ist es damit möglich, Zeit zu sparen, wenn mehrere gleiche Prozesse ablaufen sollen, deren Vergleichbarkeit zu erhöhen und Fehler bei den Einstellungen zu verhindern.

Ein weiterer Aspekt der Erfindung ist ein Nachrüstsatz für einen Laborgeräteset der hierin dargelegten Art, wobei der Nachrüstsatz ein oder mehrere Erweiterungslaborgeräte, wie im Anspruch 10 beansprucht wird, umfasst. Dadurch besteht für den Benutzer die Möglichkeit, nach Anschaffung eines ersten Laborgeräts der hierin dargelegten Art auch noch nachträglich zu entscheiden, eine Erweiterung anzuschaffen.

Obige und weitere Ausführungsformen, spezifische Ausgestaltungen, Merkmale und Zweckmä-ßigkeiten der Erfindung werden nachfolgend anhand der in den beigefügten Zeichnungen dargestellten Beispiele näher erläutert. Die Zeichnungen sind rein schematisch, sie sind insbesondere nicht als maßstabsgetreu zu lesen. Es zeigen:
Fig. 1 einen prinzipiellen Aufbau eines Laborgerätesets gemäß der vorliegenden Erfindung mit einem Basislaborgerät und mindestens einem Erweiterungslaborgerät mit verschiedenen Arten von Kopplungseinrichtungen,
Fig. 2 einen prinzipiellen Aufbau eines Laborgerätesets gemäß der vorliegenden Erfindung mit mehreren identischen modularen Laborgeräten und einer externen Steuerungseinheit,
Fig. 3 eine perspektivische Darstellung eines Beispiels von Kopplungseinrichtungen an zusammenkoppelbaren gleichartigen Laborgeräten gemäß der vorliegenden Erfindung,
Fig. 4 eine perspektivische Darstellung eines weiteren Beispiels von Kopplungseinrichtungen an zusammenkoppelbaren gleichartigen Laborgeräten gemäß der vorliegenden Erfindung,
Fig. 5 eine perspektivische Darstellung zweier zusammenkoppelbarer gleichartiger Laborgeräte gemäß der vorliegenden Erfindung in einem nicht aneinander gekoppelten Zustand und
Fig. 6 die Laborgeräte der Fig. 5 in einem aneinander gekoppelten Zustand.

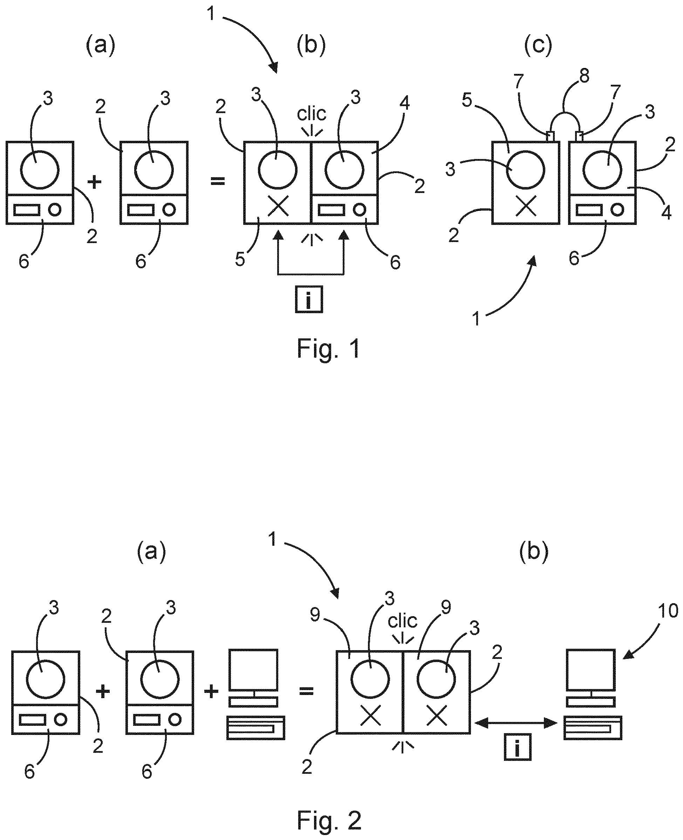

Alle weiter oben in der Beschreibung und in den nachfolgenden Ansprüchen erwähnten verschiedenen Varianten und spezifischen Ausgestaltungsmerkmale des erfindungsgemäßen Laborgerätesets und des Nachrüstsatzes der hierin dargelegten Art können bei den in Fig. 1 bis 6 gezeigten Beispielen implementiert sein. Sie werden daher nachfolgend nicht alle nochmals wiederholt. Das Gleiche gilt für die weiter oben angegebenen Begriffsdefinitionen und Wirkungen in Bezug auf einzelne Merkmale, die in den Figuren gezeigt sind.

Fig. 1 ist eine schematische Skizze des prinzipiellen Aufbaus eines Laborgerätesets 1 gemäß der Erfindung. Fig. 1a) zeigt nur zum Vergleich zwei herkömmliche Einzelgeräte, während Figuren 1b) und 1c) jeweils einen erfindungsgemäßen Laborgeräteset 1 zeigen.

Rein beispielshaft sind die in den Figuren gezeigten Laborgeräte als Magnetrührer ausgebildet. Jeder dieser Magnetrührer umfasst ein Außengehäuse 2, eine Heizplatte 3 und einen innerhalb des Außengehäuses 2 angeordneten Magnetantrieb (nicht gezeigt) zum Erzeugen eines geeigneten Magnetfelds, um einen Rührer in einem auf der Heizplatte 3 stehenden Gefäß (nicht gezeigt) in eine Rührbewegung zu versetzen.

In Fig. 1b) umfasst der Laborgeräteset 1 ein erstes Laborgerät der hierin dargelegten Art als Basislaborgerät 4 und mindestens ein weiteres Laborgerät der hierin dargelegten Art als Erweiterungslaborgerät 5 (in der Figur zur Übersichtlichkeit nur eins). Das Basislaborgerät 4 und das Erweiterungslaborgerät 5 sind im obigen Sinne gleichartig, weil sie in diesem Beispiel beide als Magnetrührer mit einstellbaren Betriebsparametern, wie z. B. Temperatur der Heizplatte 3 oder Rührstärke, zur Steuerung von deren Rühr- und Heizfunktionen ausgebildet sind.

Im Gegensatz zu den in Fig. 1a) gezeigten herkömmlichen Einzelgeräten, von denen jedes eine Benutzerschnittstelle 6 zum Einstellen seiner Betriebsparameter benötigt, hat im erfindungsgemäßen Laborgeräteset 1 der Fig. 1b) nur das Basislaborgerät 4 eine in seinem Außengehäuse 2 integrierte Benutzerschnittstelle 6, die als eine gemeinsame Einstelleinrichtung der hierin dargelegten Art dient, d. h. mittels derer die Betriebsparameter zentral sowohl für das Basislaborgerät 4 als auch für das Erweiterungslaborgerät 5 einstellbar sind.

Daher wird beim Erweiterungslaborgerät 5 keine Benutzerschnittstelle 6 benötigt, was symbolisch durch ein Kreuz angedeutet ist. Die genannte Benutzerschnittstelle 6 kann im vorliegenden Beispiel auch eine Benutzeranzeige, beispielsweise in Form eines Displays, umfassen, die zum Anzeigen der eingestellten Betriebsparameter für das Basislaborgerät 4 und das Erweiterungslaborgerät 5 und/oder zum Anzeigen der Gesamtzahl zusammengekoppelter Laborgeräte ausgebildet ist.

Das Basislaborgerät 4 und das Erweiterungslaborgerät 5 sind in Fig. 1b) über deren (nicht gezeigte) Kopplungseinrichtungen aneinander gekoppelt. Die Kopplungseinrichtungen des Basislaborgeräts 4 und des Erweiterungslaborgeräts 5 umfassen jeweils mindestens ein mechanisches Kopplungselement zum mechanischen Befestigen der Außengehäuse 2 des Basislaborgeräts 4 und des Erweiterungslaborgeräts 5 aneinander sowie mindestens ein elektrisches Kopplungselement zur elektrischen Verbindung des Basislaborgeräts 4 und des Erweiterungslaborgeräts 5 zur Weiterleitung der an der Benutzerschnittstelle 6 des Basislaborgeräts 4 für das Erweiterungslaborgerät 5 eingestellten Betriebsparameter an das Erweiterungslaborgerät 5 (durch einen Doppelpfeil mit einem Informationszeichen angedeutet). Im Beispiel der Fig. 1b) umfassen die mechanischen Kopplungselemente zudem eine Rast- oder Klemmeinrichtung (symbolisch durch "Clic" und drei Striche an den Verbindungsstellen der beiden Außengehäuse 2 angedeutet) zum Fixieren der Außengehäuse 2 des Basislaborgeräts 4 und des Erweiterungslaborgeräts 5 aneinander.

In Fig. 1c) unterscheidet sich der erfindungsgemäße Laborgeräteset 1 von demjenigen der Fig. 1b) nur in der konkreten Ausgestaltung der Kopplungseinrichtungen des Basislaborgeräts 4 und des Erweiterungslaborgeräts 5. In Fig. 1c) sind die Kopplungseinrichtungen als elektrische Kopplungselemente in Form in den Außengehäusen 2 integrierter elektrischer Anschlüsse 6 ausgebildet, beispielsweise als geeignete elektrische Steckverbindungen, die durch ein vorzugsweise kurzes Verbindungskabel 8 elektrisch verbunden sind.

Fig. 2b) zeigt einen zu Fig. 1b) alternativen prinzipiellen Aufbau eines erfindungsgemäßen Laborgerätesets 1. Hier umfasst der Laborgeräteset 1 mehrere (in Figur zur Übersichtlichkeit nur zwei) vorzugsweise identische modulare Laborgeräte 9, von denen jedes ein erstes Laborgerät der hierin dargelegten Art darstellen kann. Wie in Fig. 1a), zeigt auch Fig. 2a) nur zum Vergleich dazu zwei herkömmliche Einzelgeräte.

Im Unterschied zu Fig. 1b) sind in Fig. 2a) die Betriebsparameter der modularen Laborgeräte 9 zentral über eine in einer externen Steuerungseinheit 10, insbesondere einem Computer, vorgesehene gemeinsame Einstelleinrichtung der hierin dargelegten Art (beispielsweise Computertastatur etc.) einstellbar. Hierzu umfasst die Kopplungseinrichtung (nicht gezeigt) eines jeden modularen Laborgeräts 9 mindestens ein elektrisches Kopplungselement zur elektrischen Verbindung eines oder beider modularen Laborgeräte 9 mit der externen Steuerungseinheit 10 (durch einen Doppelpfeil mit einem Informationszeichen angedeutet) und/oder untereinander zum Weiterleiten der mittels der gemeinsamen Einstelleinrichtung in der externen Steuerungseinheit 10 für das jeweilige modulare Laborgerät 9 eingestellten Betriebsparameters an dieses modulare Laborgerät 9. Daher wird bei den modularen Laborgeräten 9 keine Benutzerschnittstelle 6 wie bei den herkömmlichen Einzelgeräten der Fig. 2a) benötigt, was in Fig. 2b) symbolisch durch ein Kreuz im jeweiligen Außengehäuse 2 der modularen Laborgeräte 9 angedeutet ist. Im Übrigen gilt hier das in Bezug auf Fig. 2b) Ausgeführte entsprechend.

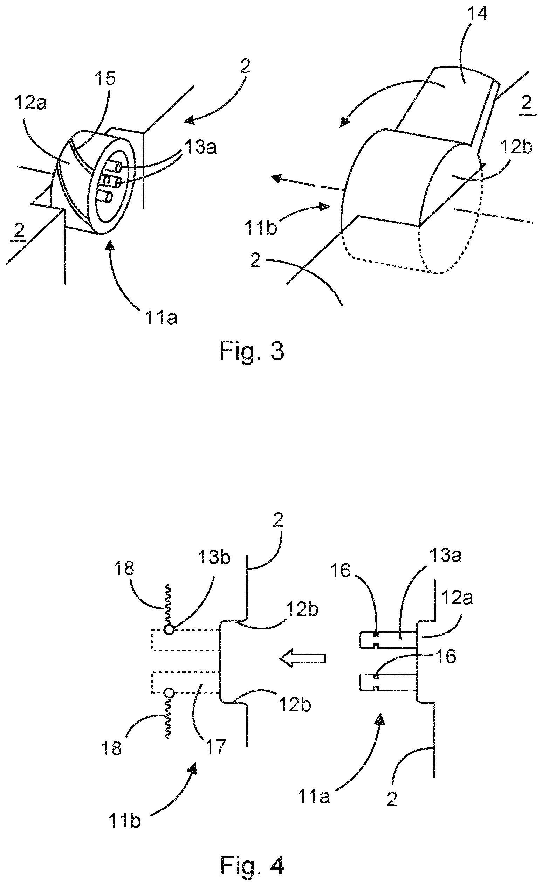

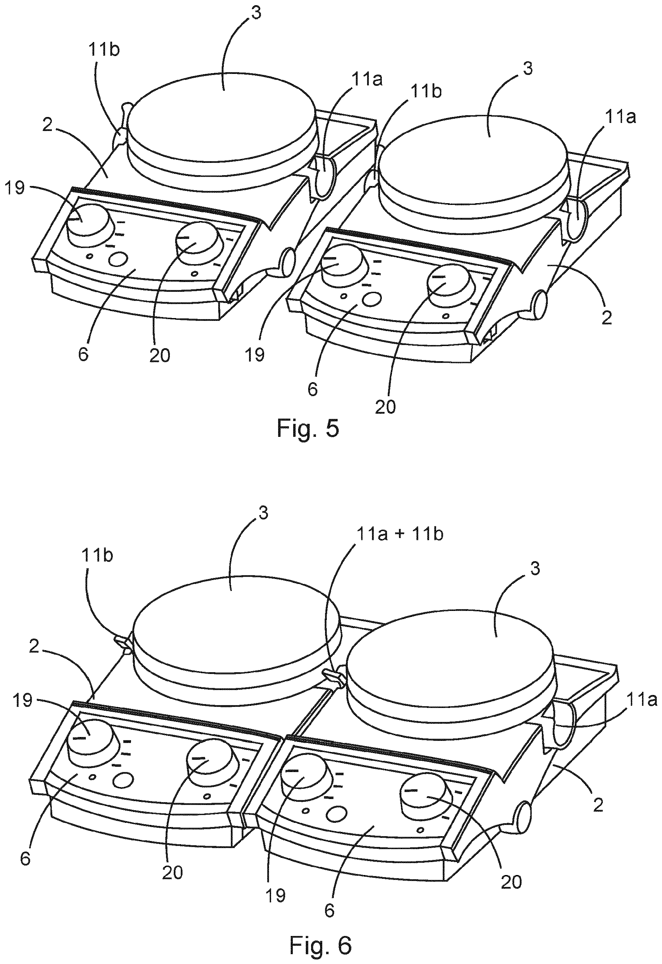

Fig. 3 zeigt eine perspektivische Darstellung eines Beispiels von Kopplungseinrichtungen 11a und 11b in Außengehäusen 2 zweier gemäß der vorliegenden Erfindung zusammenkoppelbarer gleichartiger Laborgeräte. Es kann sich dabei insbesondere um die Magnetrührer der Fig. 1b), 1c), 2b) oder der nachfolgenden Fig. 5 und 6 handeln. Die Kopplungseinrichtungen 11a und 11b sind derart komplementär ausgebildet, dass die beiden Außengehäuse 2 durch das Zusammenwirken der Kopplungseinrichtungen 11a und 11b, im Beispiel der Fig. 3 durch das Ineinandergreifen, aneinander ankoppelbar sind.

In Fig. 3 stellt die jeweilige Kopplungseinrichtung 11a bzw. 11b einen mechanisch fixierenden elektrischen Steckverbinder dar, bei dem ein mechanisches Kopplungselement 12a bzw. 12b mit einem elektrischen Kopplungselement 13a bzw. 13b (Letzteres in Fig. 3 verdeckt) integral ausgebildet sind. Das mechanische Kopplungselement 12a/12b hat dabei die Form ineinander greifender, vorzugsweise nach außen flüssigkeitsdichtender Hülsen, wobei die Außenhülse 12b um die Innenhülse 12a mittels eines Drehgriffs 14 bis zu einem verriegelten Zustand des Steckverbinders drehbar ist (durch einen Drehpfeil angedeutet). Beim Drehen wird die Außenhülse 12b entlang eines Außengewindes 15 der Innenhülse 12a geführt. Insgesamt ergibt sich somit eine ausrichtende (Führungseinrichtung) und fixierende (Rast- oder Klemmeinrichtung) Funktion der mechanischen Kopplungselemente 12a und 12b. In deren Innerem ist das elektrische Kopplungselement 13a bzw. 13b in Form aneinander anschließender elektrischer Kontakte angeordnet.

Fig. 4 zeigt eine perspektivische Darstellung eines zu Fig. 3 alternativen Beispiels der Kopplungseinrichtung 11a bzw. 11b, ebenfalls in Form eines mechanisch fixierenden elektrischen Steckverbinders, wobei Elemente mit einer ähnlichen oder entsprechenden Funktion wie in Fig. 3 mit den gleichen Bezugszeichen gekennzeichnet sind. In Fig. 4 ist das mechanische Kopplungselement 12a des in Fig. 4 rechten Laborgeräts als ein Vorsprung in seinem Außengehäuse 2 ausgebildet, der zum vorzugsweise flüssigkeitsdichten Eingreifen in das mechanische Kopplungselement 12b des in Fig. 4 linken Laborgeräts ausgebildet, das als eine hierzu komplementäre Ausnehmung im Außengehäuse 2 des linken Laborgeräts ausgebildet ist. Dadurch ergibt sich eine ausrichtende (Führungseinrichtung) Funktion der mechanischen Kopplungselemente 12a und 12b. Das elektrische Kopplungselement 13a des in Fig. 4 rechten Laborgeräts ist dabei als sich vom Vorsprung seines Außengehäuses 2 senkrecht nach außen erstreckende elektrische Steckkontakte (in Fig. 4 rein beispielhaft zwei) ausgebildet, die an deren distalen Enden seitliche Einrastkerben 16 aufweisen. In diese Einrastkerben 16 werden beim Ineinandergreifen der mechanischen Kopplungselemente 12a und 12b die beispielswiese kugelförmigen elektrischen Kontakte des elektrischen Kopplungselements 13b des in Fig. 4 linken Laborgeräts gedrückt, die in seinem Außengehäuse 2 hinter der Ausnehmung 12b in Seitenwänden zu den Steckkontakten komplementärer Kanäle 17 angeordnet sind und durch Federn 18 seitlich in die Kanäle 17 hineingedrückt werden (Rast- oder Klemmeinrichtung).

Fig. 5 zeigt eine perspektivische Darstellung zweier modular zusammenkoppelbarer gleichartiger Laborgeräte gemäß der vorliegenden Erfindung in einem nicht aneinander gekoppelten Zustand, während Fig. 6 die Laborgeräte der Fig. 5 in deren aneinander gekoppeltem Zustand zeigt. Es kann sich dabei insbesondere um ein Laborgerätesystem 1 der Fig. 1b) oder 2b) handeln, wobei das Vorhandensein und die Ausgestaltung der Benutzerschnittstellen 6 bei einem oder beiden der in den Figuren 5 und 6 gezeigten Laborgeräte in den Figuren 5/6 als rein beispielhaft und nicht zwingend erforderlich zu betrachten sind.

Wie auch in Bezug auf Figuren 1 und 2 beschrieben, sind die in Fig. 5/6 gezeigten Laborgeräte als Magnetrührer ausgebildet. Jeder dieser Magnetrührer umfasst ein Außengehäuse 2, eine Heizplatte 3 und einen innerhalb des Außengehäuses 2 angeordneten Magnetantrieb (nicht gezeigt) zum Erzeugen eines geeigneten Magnetfelds, um einen Rührer in einem auf der Heizplatte 3 stehenden Gefäß (nicht gezeigt) in eine Rührbewegung zu versetzen. Über die an einer Vorderseite des Außengehäuses 2 angeordnete Benutzerschnittstelle 6, die rein beispielhaft zwei Drehknöpfe 19 und 20 umfasst, sind Betriebsparametern, wie z. B. Temperatur der Heizplatte 3 oder Rührstärke, zur Steuerung der Rühr- und Heizfunktion einstellbar.

In Fig. 5/6 weist jedes Laborgerät zwei an gegenüberliegenden Seiten seines Außengehäuses 2 angeordnete Kopplungseinrichtungen 11a und 11b, die wie in Fig. 3 ausgebildet sein können. In Fig. 6 sind die beiden Laborgeräte durch das Zusammenwirken von deren komplementären Kopplungseinrichtungen 11a (auf der rechten Seite des linken Laborgeräts) und 11b (auf der linken Seite des rechten Laborgeräts) aneinander gekoppelt, wie beispielsweise in Bezug auf Fig. 3 im Detail beschrieben.

Neben den hierin rein beispielhaft erwähnten USB-Schnittstellen oder elektrischen Steckverbindungen und Kabelverbindungen können die geeigneten elektrischen Kopplungselemente der Kopplungseinrichtungen im Rahmen der Erfindung auch Einrichtungen zur drahtlosen Kommunikation umfassen oder darstellen.

## Patentansprüche

1. Laborgeräteset (1), umfassend
ein erstes Laborgerät (4, 9), insbesondere Magnetrührer, mit mindestens einem einstellbaren Betriebsparameter zum Steuern mindestens einer Laborgerätfunktion und einem Außengehäuse (2), und mindestens ein weiteres Laborgerät (5, 9) für dieselbe mindestens eine Laborgerätfunktion, bei dem der mindestens eine Betriebsparameter ebenfalls einstellbar ist,
wobei das Außengehäuse (2) des ersten Laborgeräts eine Kopplungseinrichtung (11a, 11b) zum Ankoppeln des Laborgeräts (4, 9) an das mindestens eine weitere Laborgerät (5, 9) aufweist und das Außengehäuse (2) des mindestens einen weiteren Laborgeräts (5, 9) eine Kopplungseinrichtung (11a, 11b) zum Ankoppeln an das erste Laborgerät (4, 9) aufweist, die derart ausgebildet sind, dass mittels der Kopplungseinrichtungen (11a, 11b) das erste Laborgerät (4, 9) und das mindestens eine weitere Laborgerät (5, 9) gleichzeitig betreibbar sind und der mindestens eine Betriebsparameter des jeweiligen Laborgeräts zentral über eine gemeinsame Einstelleinrichtung unabhängig und/oder einheitlich für das Laborgerät (4, 9) und das mindestens eine weitere Laborgerät (5, 9) einstellbar ist,
wobei die gemeinsame Einstelleinrichtung eine im Außengehäuse (2) des ersten Laborgeräts (4, 9) integrierte Benutzerschnittstelle (6) darstellt, und wobei die Kopplungseinrichtungen (11a, 11b) mindestens ein mechanisches Kopplungselement (12a, 12b) zu einem lösbaren und insbesondere starren Befestigen des mindestens einen weiteren Laborgeräts (5, 9) an dem ersten Laborgerät (4, 9) umfassen, und mindestens ein elektrisches Kopplungselement (13a, 13b, 7, 8) zu einer lösbaren elektrischen Verbindung des ersten Laborgeräts (4, 9) mit dem mindestens einen weiteren Laborgerät (5, 9) zum Weiterleiten des mittels der gemeinsamen Einstelleinrichtung für das erste Laborgerät (4, 9) und/oder das mindestens eine weitere Laborgerät (5, 9) eingestellten mindestens einen Betriebsparameters an das jeweilige Laborgerät,
wobei das mechanische Kopplungselement des ersten Laborgeräts als ein Vorsprung (12a) im Außengehäuse (2) ausgebildet ist und das mechanische Kopplungselement des mindestens einen weiteren Laborgeräts als eine zu dem Vorsprung des ersten Laborgeräts komplementäre Ausnehmung (12b) im Außengehäuse (2) ausgebildet ist und
wobei das elektrische Kopplungselement des ersten Laborgeräts als sich vom Vorsprung (12a) des Außengehäuses (2) senkrecht nach außen erstreckende und Einrastkerben (16) aufweisende elektrische Steckkontakte ausgebildet ist, **dadurch gekennzeichnet, dass** das elektrische Kopplungselement des mindestens einen weiteren Laborgeräts als beispielsweise kugelförmige elektrische Kontakte ausgebildet ist, die in dem Außengehäuse (2) hinter der Ausnehmung (12b) in Seitenwänden zu den Steckkontakten des ersten Laborgeräts komplementärer Kanäle (17) angeordnet sind und durch Federn (18) seitlich in die Kanäle (17) hineingedrückt werden.

2. Laborgeräteset (4, 9) nach Anspruch 1, wobei die gemeinsame Einstelleinrichtung zum Einstellen des mindestens einen Betriebsparameters wahlweise einheitlich oder unabhängig für das erste Laborgerät (4, 9) und das mindestens eine weitere Laborgerät (5, 9) ausgebildet ist.

3. Laborgeräteset (4, 9) nach einem der Ansprüche 1 bis 2, wobei das mindestens eine mechanische Kopplungselement (12a, 12b) des ersten Laborgeräts zwei an einander gegenüberliegenden Seiten des Außengehäuses (2) des ersten Laborgeräts angeordnete mechanische Kopplungselemente (12a, 12b) jeweils zum Ankoppeln eines der weiteren Laborgeräte (5, 9) umfasst.

4. Laborgeräteset (4, 9) nach einem der vorhergehenden Ansprüche, das ferner eine Überwachungseinheit umfasst, die zur Detektion einer Gesamtzahl von mittels der Kopplungseinrichtung (11a, 11b) des ersten Laborgeräts (4, 9) und den Kopplungseinrichtungen (11a, 11b) des mindestens einen weiteren Laborgeräts (5, 9) zusammengekoppelten Laborgeräte ausgebildet ist und vorzugsweise ferner zur Ausgabe eines Warnsignals und/oder zu einer Leistungsbegrenzung des ersten Laborgeräts (4, 9) bei Überschreitung eines vorbestimmten Gesamtzahlgrenzwerts der zulässigen Gesamtzahl zusammengekoppelter Laborgeräte ausgebildet ist.

5. Laborgeräteset (4, 9) nach einem der vorhergehenden Ansprüche, das ferner eine im Außengehäuse (2) des ersten Laborgeräts angeordnete Benutzeranzeige (6) umfasst, die zum Anzeigen des eingestellten mindestens einen Betriebsparameters für das erste Laborgerät (4, 9) und vorzugsweise zusätzlich für die an dieses angekoppelten weiteren Laborgeräte (5, 9) und/oder zum Anzeigen der Gesamtzahl zusammengekoppelter Laborgeräte ausgebildet ist.

6. Laborgeräteset (4, 9) nach einem der vorhergehenden Ansprüche, wobei
das erste Laborgerät (4, 9) und das mindestens eine weitere Laborgerät (5, 9) als Magnetrührer ausgebildet sind, jeweils umfassend eine Aufstellplatte, insbesondere eine Heizplatte (3), und einen innerhalb des Außengehäuses (2) angeordneten Magnetantrieb zum Erzeugen eines geeigneten Magnetfelds, um einen Rührer in einem auf der Aufstellplatte stehenden Gefäß in eine Rührbewegung zu versetzen, und
die durch den mindestens einen einstellbaren Betriebsparameter steuerbaren Laborgerätfunktionen das Rühren und/oder Heizen einer Substanz in einem auf der Aufstellplatte stehenden Gefäß umfassen.

7. Laborgeräteset (4, 9) nach Anspruch 6, wobei die Kopplungseinrichtung (11a, 11b) des ersten Laborgeräts ferner zur mechanischen und/oder magnetischen Übertragung einer Antriebsenergie auf einen zur Umwandlung dieser Antriebsenergie in ein zur Rührfunktion geeignetes Magnetfeld ausgebildeten Magnetantrieb des mindestens einen weiteren Laborgeräts (5, 9) ausgebildet ist, sodass das mindestens eine weitere Laborgerät (5, 9) vorzugsweise keine eigene Antriebsenergie zum Erzeugen des für dessen Rührfunktion geeigneten Magnetfelds benötigt.

8. Laborgeräteset (4, 9) nach einem der Ansprüche 1 bis 7, wobei das erste Laborgerät weiter eine Steuerungseinheit umfasst, die ausgebildet und/oder programmiert ist,
den mindestens einen Betriebsparameter, der mittels der gemeinsamen Einstelleinrichtung in Bezug auf das erste Laborgerät (4, 9) eingestellt ist, zu erkennen und das erste Laborgerät (4, 9) in Abhängigkeit davon zu betreiben und
vorzugsweise ferner den mindestens einen Betriebsparameter, der mittels der gemeinsamen Einstelleinrichtung in Bezug auf die an das erste Laborgerät (4, 9) angekoppelten weiteren Laborgeräte (5, 9) eingestellt ist, zu erkennen die weiteren Laborgeräte (5, 9) in Abhängigkeit davon zu betreiben und/oder
vorzugsweise ferner eine Gesamtzahl von mittels der Kopplungseinrichtung (11a, 11b) des ersten Laborgeräts (4, 9) und entsprechender oder komplementärer Kopplungseinrichtungen (11a, 11b) des mindestens einen weiteren Laborgeräts (5, 9) zusammengekoppelten Laborgeräte zu detektieren und weiter bevorzugt ferner bei Überschreitung eines vorbestimmten Gesamtzahlgrenzwerts der zulässigen Gesamtzahl zusammengekoppelter Laborgeräte eine Leistung des ersten Laborgeräts (4, 9) zu begrenzen und/oder ein Warnsignal auszugeben.

9. Laborgeräteset (1) nach einem der Ansprüche 1 bis 8,
wobei die Kopplungseinrichtungen (11a, 11b) des ersten und des bzw. der weiteren Laborgeräts/Laborgeräte untereinander derart entsprechend oder komplementär ausgebildet sind, dass das erste und das bzw. die weiteren Laborgerät(e) jeweils durch das Zusammenwirken der jeweiligen Kopplungseinrichtungen (11a, 11b) aneinander ankoppelbar sind,
wobei vorzugsweise die Kopplungseinrichtungen (11a, 11b) des ersten und des bzw. der weiteren Laborgeräts/Laborgeräte untereinander einheitlich ausgebildet sind.

10. Laborgeräteset (1) nach einem der Ansprüche 1 bis 9, wobei
das erste Laborgerät ein Basislaborgerät (4) darstellt, in dessen Außengehäuse (2) die gemeinsame Einstelleinrichtung in Form einer Benutzerschnittstelle (6) integriert ist, und
das mindestens eine weitere Laborgerät eine Anzahl von vorzugsweise untereinander identischen Erweiterungslaborgeräten (5) darstellt, die an das Basislaborgerät (4) mittels der jeweiligen Kopplungseinrichtungen (11a, 11b) modular ankoppelbar sind,
wobei die Kopplungseinrichtungen (11a, 11b) des Basislaborgeräts (4) und der Erweiterungslaborgeräte (5) jeweils mindestens ein elektrisches Kopplungselement (13a, 13b, 7, 8) zu einer lösbaren elektrischen Verbindung des Basislaborgeräts (4) und der Erweiterungslaborgeräte (5) untereinander zur Weiterleitung des an der Benutzerschnittstelle (6) des Basislaborgeräts (4) für die Erweiterungslaborgeräte (5) eingestellten mindestens einen Betriebsparameters an die Erweiterungslaborgeräte (5) umfassen.

11. Nachrüstsatz für einen Laborgeräteset (1) nach Anspruch 10, wobei der Nachrüstsatz ein oder mehrere Erweiterungslaborgeräte (5) gemäß Anspruch 10 umfasst.

## Claims

1. Laboratory device set (1), comprising
a first laboratory device (4, 9), in particular a magnetic stirrer, with at least one adjustable operating parameter for controlling at least one laboratory device function and an outer housing (2), and at least one further laboratory device (5, 9) for the same at least one laboratory device function, in which the at least one operating parameter is also adjustable,
wherein the outer housing (2) of the first laboratory device has a coupling element (11a, 11b) for coupling the laboratory device (4, 9) to the at least one further laboratory device (5, 9) and the outer housing (2) of the at least one further laboratory device (5, 9) has a coupling element (11a, 11b) for coupling to the first laboratory device (4, 9), which are arranged in such a way that the first laboratory device (4, 9) and the at least one further laboratory device (5, 9) can be operated simultaneously by means of the coupling elements (11a, 11b) and the at least one operating parameter of the respective laboratory device can be set centrally via a common setting device independently and/or unitarily for the laboratory device (4, 9) and the at least one further laboratory device (5, 9),
wherein the common setting device is a user interface (6) integrated in the outer housing (2) of the first laboratory device (4, 9), and
wherein the coupling elements (11a, 11b) comprise at least one mechanical coupling element (12a, 12b) for a detachable and in particular rigid fastening of the at least one further laboratory device (5, 9) to the first laboratory device (4, 9), and at least one electrical coupling element (13a, 13b, 7, 8) for a detachable electrical connection of the first laboratory device (4, 9) to the at least one further laboratory device (5, 9) for forwarding the at least one operating parameter set by means of the common setting device for the first laboratory device (4, 9) and/or the at least one further laboratory device (5, 9) to the respective laboratory device,
wherein the mechanical coupling element of the first laboratory device is in the form of a protrusion (12a) in the outer housing (2) and the mechanical coupling element of the at least one further laboratory device is in the form of a recess (12b) in the outer housing (2) which is complementary to the protrusion of the first laboratory device, and
wherein the electrical coupling element of the first laboratory device is in the form of electrical plug contacts extending vertically outwards from the protrusion (12a) of the outer housing (2) and having latching notches (16), **characterized in that**
**in that** the electrical coupling element of the at least one further laboratory device is in the form of, for example, spherical electrical contacts which are arranged in the outer housing (2) behind the recess (12b) in side walls of complementary channels (17) to the plug contacts of the first laboratory device and are pressed laterally into the channels (17) by springs (18).

2. Laboratory device set (4, 9) according to claim 1, wherein the common setting device for setting the at least one operating parameter is optionally arranged uniformly or independently for the first laboratory device (4, 9) and the at least one further laboratory device (5, 9).

3. Laboratory device set (4, 9) according to one of claims 1 to 2, wherein the at least one mechanical coupling element (12a, 12b) of the first laboratory device comprises two mechanical coupling elements (12a, 12b) arranged on opposite sides of the outer housing (2) of the first laboratory device, each for coupling one of the further laboratory devices (5, 9).

4. Laboratory device set (4, 9) according to one of the preceding claims, further comprising a monitoring unit arranged to detect a total number of laboratory devices (5, 9) coupled together by means of the coupling elements (11a, 11b) of the first laboratory device (4, 9) and the coupling elements (11a, 11b) of the at least one further laboratory device (5, 9), 9) and is preferably also arranged to output a warning signal and/or to limit the power of the first laboratory device (4, 9) when a predetermined total number limit value of the permitted total number of coupled laboratory devices is exceeded.

5. Laboratory device set (4, 9) according to one of the preceding claims, which further comprises a user display (6) which is arranged in the outer housing (2) of the first laboratory device and is arranged to display the set at least one operating parameter for the first laboratory device (4, 9) and preferably additionally for the further laboratory devices (5, 9) coupled thereto and/or to display the total number of coupled laboratory devices.

6. Laboratory device set (4, 9) according to one of the preceding claims, wherein
the first laboratory device (4, 9) and the at least one further laboratory device (5, 9) are in the form of a magnetic stirrer, each comprising a support plate, in particular a heating plate (3), and a magnetic drive arranged inside the outer housing (2) for generating a suitable magnetic field in order to set a stirrer in a vessel standing on the support plate into a stirring movement, and
the laboratory device functions controllable by the at least one adjustable operating parameter comprise the stirring and/or heating of a substance in a vessel standing on the support plate.

7. Laboratory device set (4, 9) according to claim 6, wherein the coupling element (11a, 11b) of the first laboratory device is furthermore arranged to mechanically and/or magnetically transmit a drive energy to a magnetic drive of the at least one further laboratory device (5, 9), which is arranged to convert this drive energy into a magnetic field suitable for the stirring function, so that the at least one further laboratory device (5, 9) preferably does not require any drive energy of its own to generate the magnetic field suitable for its stirring function.

8. Laboratory device set (4, 9) according to any one of claims 1 to 7, wherein the first laboratory device further comprises a control unit which is arranged and/or programmed for
recognizing the at least one operating parameter, which is set by means of the common setting device with respect to the first laboratory device (4, 9), and operating the first laboratory device (4, 9) in dependence thereon, and
preferably further recognizing the at least one operating parameter which is set by means of the common setting device in relation to the further laboratory devices (5, 9) coupled to the first laboratory device (4, 9), operating the further laboratory devices (5, 9) in dependence thereon and/or
preferably further detecting a total number of laboratory devices coupled together by means of the coupling element (11a, 11b) of the first laboratory device (4, 9) and corresponding or complementary coupling elements (11a, 11b) of the at least one further laboratory device (5, 9) and further preferably further limiting a power of the first laboratory device (4, 9) and/or to output a warning signal if a predetermined total number limit value of the permitted total number of coupled laboratory devices is exceeded.

9. Laboratory device set (1) according to one of claims 1 to 8,
wherein the coupling elements (11a, 11b) of the first and the further laboratory device(s) are designed to be corresponding or complementary to each other in such a way that the first and the further laboratory device(s) can each be coupled to each other by the interaction of the respective coupling elements (11a, 11b),
wherein preferably the coupling elements (11a, 11b) of the first and of the further laboratory device(s) are formed unitarily with respect to each other.

10. Laboratory device set (1) according to one of claims 1 to 9, wherein
the first laboratory appliance is a basic laboratory appliance (4), in the outer housing (2) of which the common setting device is integrated in the form of a user interface (6), and
the at least one further laboratory device represents a number of preferably mutually identical extension laboratory devices (5), which can be modularly coupled to the basic laboratory device (4) by means of the respective coupling elements (11a, 11b),
wherein the coupling elements (11a, 11b) of the basic laboratory device (4) and the extension laboratory devices (5) each comprise at least one electrical coupling element (13a, 13b, 7, 8) for a detachable electrical connection of the basic laboratory device (4) and the extension laboratory devices (5) to one another for forwarding the at least one operating parameter set at the user interface (6) of the basic laboratory device (4) for the extension laboratory devices (5) to the extension laboratory devices (5).

11. Retrofit kit for a laboratory device set (1) according to claim 10, wherein the retrofit kit comprises one or more extension laboratory device (5) according to claim 10.

## Revendications

1. Ensemble de dispositifs de laboratoire (1), comprenant
un premier dispositif de laboratoire (4, 9), en particulier un agitateur magnétique, avec au moins un paramètre de fonctionnement réglable pour contrôler au moins une fonction du dispositif de laboratoire et un boîtier extérieur (2), et au moins un autre dispositif de laboratoire (5, 9) pour la même au moins une fonction du dispositif de laboratoire, dans lequel le au moins un paramètre de fonctionnement est également réglable,
dans lequel le boîtier extérieur (2) du premier dispositif de laboratoire comporte un élément de couplage (11a, 11b) pour le couplage du dispositif de laboratoire (4, 9) à au moins un autre dispositif de laboratoire (5, 9) et le boîtier extérieur (2) d'au moins un autre dispositif de laboratoire (5, 9) comporte un élément de couplage (11a, 11b) pour le couplage au premier dispositif de laboratoire (4, 9), qui sont disposés de manière à ce que le premier dispositif de laboratoire (4, 9) et au moins un autre dispositif de laboratoire (5, 9) puissent être utilisés simultanément au moyen des éléments de couplage (11a, 11b) et l'au moins un paramètre de fonctionnement du dispositif de laboratoire respectif peut être réglé de manière centralisée via un dispositif de réglage commun, indépendamment et/ou de manière unitaire pour le dispositif de laboratoire (4, 9) et l'au moins un autre dispositif de laboratoire (5, 9),
dans lequel le dispositif de réglage commun est une interface utilisateur (6) intégrée dans le boîtier extérieur (2) du premier dispositif de laboratoire (4, 9), et
dans lequel les éléments de couplage (11a, 11b) comprennent au moins un élément de couplage mécanique (12a, 12b) pour une fixation détachable et en particulier fixe d'au moins un autre dispositif de laboratoire (5, 9) au premier dispositif de laboratoire (4, 9), et au moins un élément de couplage électrique (13a, 13b, 7, 8) pour une connexion électrique détachable du premier dispositif de laboratoire (4, 9) à l'au moins un autre dispositif de laboratoire (5, 9) pour transmettre l'au moins un paramètre de fonctionnement réglé au moyen du dispositif de réglage commun pour le premier dispositif de laboratoire (4, 9) et/ou l'au moins un autre dispositif de laboratoire (5, 9) au dispositif de laboratoire respectif,
l'élément de couplage mécanique du premier dispositif de laboratoire se présente sous la forme d'une protubérance (12a) dans le boîtier extérieur (2) et l'élément de couplage mécanique du au moins un autre dispositif de laboratoire se présente sous la forme d'une cavité (12b) dans le boîtier extérieur (2) qui est complémentaire de la protubérance du premier dispositif de laboratoire, et
dans lequel l'élément de couplage électrique du premier dispositif de laboratoire se présente sous la forme de contacts de fiche électrique s'étendant verticalement vers l'extérieur à partir de la protubérance (12a) du boîtier extérieur (2) et comportant des encoches de verrouillage (16), **caractérisé par** que
l'élément de couplage électrique d'au moins un autre dispositif de laboratoire se présente sous la forme, par exemple, de contacts électriques sphériques qui sont disposés dans le boîtier extérieur (2) derrière l'évidement (12b) dans les parois latérales des canaux (17) complémentaires aux contacts enfichables du premier dispositif de laboratoire et qui sont pressés latéralement dans les canaux (17) par des ressorts (18).

2. Ensemble de dispositifs de laboratoire (4, 9) selon la revendication 1, dans lequel le dispositif de réglage commun pour le réglage d'au moins un paramètre de fonctionnement est au choix disposé unitairement ou indépendamment pour le premier dispositif de laboratoire (4, 9) et pour au moins un autre dispositif de laboratoire (5, 9).

3. Ensemble de dispositifs de laboratoire (4, 9) selon l'une des revendications 1 à 2, dans lequel l'au moins un élément de couplage mécanique (12a, 12b) du premier dispositif de laboratoire comprend deux éléments de couplage mécanique (12a, 12b) disposés sur les côtés opposés du boîtier extérieur (2) du premier dispositif de laboratoire, chacun pour le couplage d'un des autres dispositifs de laboratoire (5, 9).

4. Ensemble de dispositifs de laboratoire (4, 9) selon l'une des revendications précédentes, comprenant de plus une unité de surveillance conçue pour détecter un nombre total de dispositifs de laboratoire (5, 9) couplés ensemble au moyen des éléments de couplage (11a, 11b) du premier dispositif de laboratoire (4, 9) et des éléments de couplage (11a, 11b) d'au moins un autre dispositif de laboratoire (5, 9), 9) et est de préférence également conçue pour émettre un signal d'avertissement et/ou pour limiter la puissance du premier dispositif de laboratoire (4, 9) lorsqu'une quantité totale limite prédéterminée du nombre total autorisé de dispositifs de laboratoire couplés est dépassée.

5. Ensemble de dispositifs de laboratoire (4, 9) selon l'une des revendications précédentes, qui comprend en outre un écran d'utilisateur (6) disposé dans le boîtier extérieur (2) du premier dispositif de laboratoire et disposé à afficher au moins un paramètre de fonctionnement réglé pour le premier dispositif de laboratoire (4, 9) et de préférence aussi pour les autres dispositifs de laboratoire (5, 9) qui y sont couplés et/ou à afficher le nombre total de dispositifs de laboratoire couplés.

6. Ensemble de dispositifs de laboratoire (4, 9) selon l'une des revendications précédentes, dans lequel
le premier dispositif de laboratoire (4, 9) et au moins un autre dispositif de laboratoire (5, 9) se présentent sous la forme d'un agitateur magnétique, comprenant chacun une plaque de support, en particulier une plaque chauffante (3), et un moteur magnétique disposé à l'intérieur du boîtier extérieur (2) pour générer un champ magnétique approprié afin d'entraîner un agitateur dans un récipient posé sur la plaque de support dans un mouvement d'agitation, et
les fonctions de dispositifs de laboratoire contrôlables par au moins un paramètre de fonctionnement réglable comprennent l'agitation et/ou le chauffage d'une substance dans un récipient posé sur la plaque de support.

7. Ensemble de dispositifs de laboratoire (4, 9) selon la revendication 6, dans lequel l'élément de couplage (11a, 11b) du premier dispositif de laboratoire est en outre conçu pour transmettre mécaniquement et/ou magnétiquement une énergie d'entraînement à un moteur magnétique du au moins un autre dispositif de laboratoire (5, 9), qui est conçu pour convertir cette énergie d'entraînement en un champ magnétique adapté à la fonction d'agitation, de sorte que le au moins un autre dispositif de laboratoire (5, 9) n'a de préférence pas besoin d'énergie d'entraînement propre pour générer le champ magnétique adapté à sa fonction d'agitation.

8. Ensemble de dispositifs de laboratoire (4, 9) selon l'une des revendications 1 à 7, dans lequel le premier dispositif de laboratoire comprend en outre une unité de commande agencée et/ou programmée pour
reconnaître au moins un paramètre de fonctionnement, qui est réglé au moyen du dispositif de réglage commun en ce qui concerne le premier dispositif de laboratoire (4, 9), et faire fonctionner le premier dispositif de laboratoire (4, 9) en fonction de ce paramètre, et
de préférence, reconnaître en outre l'au moins un paramètre de fonctionnement défini au moyen du dispositif de réglage commun en ce qui concerne les autres dispositifs de laboratoire (5, 9) couplés au premier dispositif de laboratoire (4, 9), et faire fonctionner les autres dispositifs de laboratoire (5, 9) en fonction de ce paramètre, et/ou
de préférence, détecter un nombre total de dispositifs de laboratoire couplés au moyen de l'élément de couplage (11a, 11b) du premier dispositif de laboratoire (4, 9) et des éléments de couplage correspondants ou complémentaires (11a, 11b) d'au moins un autre dispositif de laboratoire (5, 9) et, de préférence, limiter la puissance du premier dispositif de laboratoire (4, 9) et/ou émettre un signal d'avertissement en cas de dépassement d'une quantité limite totale prédéterminée du nombre total autorisé de dispositifs de laboratoire couplés.

9. Ensemble de dispositifs de laboratoire (1) selon l'une des revendications 1 à 8,
dans lequel les éléments de couplage (11a, 11b) du premier et du second dispositif de laboratoire sont conçus pour se correspondre ou se compléter de manière à ce que le premier et le second dispositif de laboratoire puissent être couplés l'un à l'autre par l'interaction des éléments de couplage respectifs (11a, 11b),
de préférence, les éléments de couplage (11a, 11b) du premier et du ou des autres dispositifs de laboratoire sont formés de façon unitaire l'un par rapport à l'autre.

10. Ensemble de dispositifs de laboratoire (1) selon l'une des revendications 1 à 9, dans lequel
le premier dispositif de laboratoire est un dispositif de laboratoire basique (4), dans le boîtier extérieur (2) duquel le dispositif de réglage commun est intégré sous la forme d'une interface utilisateur (6), et
le au moins un autre dispositif de laboratoire représente un certain nombre de dispositifs de laboratoire d'extension (5), de préférence identiques entre eux, qui peuvent être couplés de manière modulaire à le dispositif de laboratoire basique (4) au moyen des éléments de couplage respectifs (11a, 11b),
dans lequel les éléments de couplage (11a, 11b) du dispositif de laboratoire basique (4) et des dispositifs de laboratoire d'extension (5) comprennent chacun au moins un élément de couplage électrique (13a, 13b, 7, 8) pour une connexion électrique détachable du dispositif de laboratoire basique (4) et des dispositifs de laboratoire d'extension (5) l'un à l'autre pour transmettre aux dispositifs de laboratoire d'extension (5) au moins un paramètre de fonctionnement réglé sur l'interface utilisateur (6) du dispositif de laboratoire basique (4) pour les dispositifs de laboratoire d'extension (5).

11. Kit de rééquipement pour un ensemble de dispositifs de laboratoire (1) selon la revendication 10, dans lequel le kit de rééquipement comprend un ou plusieurs dispositifs de laboratoire d'extension (5) selon la revendication 10.
